# EUROPÄISCHE PATENTSCHRIFT

(11) **EP 3 247 732 B1**
(45) Veröffentlichungstag und Bekanntmachung des Hinweises auf die Patenterteilung: **12.12.2018**
(21) Anmeldenummer: 16700761.6
(22) Anmeldetag: 15.01.2016
(51) Int. Cl.: C08G 18/73, C08G 18/79, C08G 18/10, C08G 18/12, C09D 175/06, C08G 18/42, C09J 175/06

(54) **KRISTALLISATIONSSTABILE POLYESTERPREPOLYMERE**
CRYSTALLISATION STABLE POLYESTER PREPOLYMERS
PRÉ-POLYMÈRE DE POLYESTER RÉSISTANT À LA CRISTALLISATION

(30) Priorität: 20.01.2015 EP 15151867
(43) Veröffentlichungstag der Anmeldung: 29.11.2017
(73) Patentinhaber: Covestro Deutschland AG, 51373 Leverkusen (DE)
(72) Erfinder: MAGER, Dieter, 51373 Leverkusen (DE); LAAS, Hans-Josef, 51519 Odenthal (DE); WÜHRER, Karl-Heinrich, 51143 Köln (DE)
(74) Vertreter: Levpat
(86) Internationale Anmeldenummer: PCT/EP2016/050813
(87) Internationale Veröffentlichungsnummer: WO 2016/116376

(56) Entgegenhaltungen:
- US-A- 5 076 958

## Beschreibung

Lösemittelfreie Zweikomponenten (2K)-Polyurethan- bzw. Polyharnstoff-Beschichtungsmittel lassen sich im Gegensatz zu lösemittelhaltigen Lacken in nahezu beliebig hohen Auftragsstärken verarbeiten. Sie finden heute im Wesentlichen im Baubereich zur Herstellung dickschichtiger Überzüge, beispielsweise zur Beschichtung mechanisch oder chemisch stark beanspruchter Flächen, wie z. B. Industriefußböden, Verkehrsflächen, Parkdecks, zur Balkonabdichtung aber auch im Korrosionsschutz Verwendung.

Für Außenanwendungen sind dabei hochelastische rissüberbrückende Beschichtungen, die eine hohe Stabilität gegenüber Wetterbeanspruchung, insbesondere gegenüber UV-Strahlung aufweisen, von besonderem Interesse.

Lösemittelfreie 2K-Beschichtungen erfordern zwingend flüssige, niedrigviskose Reaktionspartner. Während eine Reihe geeigneter Polyole und Polyamine mit ausreichend niedriger Viskosität, beispielsweise Polyetherpolyole, leicht verzweigte Polyesterpolyole, Polyetheramine oder Polyasparaginsäureester zur Verfügung stehen, kommen als Vernetzerkomponenten zur Herstellung elastischer Beschichtungen vorzugsweise oligomere Polyisocyanate auf Basis linearaliphatischer Diisocyanate, insbesondere Polyisocyanate des Hexamethylendiisocyanats (1,6-Diisocyanatohexan, HDI), zum Einsatz.

HDI-Polyisocyanate, wie die als Lackpolyisocyanate bekannten Derivate des HDI mit Uretdion-, Isocyanurat-, Allophanat-, Biuret-, Iminooxadiazindion- und/oder Oxadiazintrionstruktur zeichnen sich auch in lösemittelfreier Form durch niedrige Viskositäten aus und liefern bekanntermaßen hoch wetterbeständige, flexible Lackfilme.

Zur Herstellung rissüberbrückender Beschichtungen ist die mit diesen oligomeren Lackpolyisocyanaten erzielbare maximale Elastizität allerdings nicht ausreichend. Hier ist man auf die Verwendung linearer oder wenig verzweigter isocyanatfunktioneller Prepolymere (NCO-Prepolymere) als Vernetzerkomponenten angewiesen.

Flüssige monomerenarme HDI-Prepolymere sind grundsätzlich bekannt. Die WO 2004/033517 beschreibt beispielsweise NCO-Prepolymere, hergestellt durch Umsetzung von Polyisocyanaten oder Diisocyanaten, wie z. B. HDI, mit Polyetherpolyolen, als Reaktionspartner für Polyasparaginsäureester zur Herstellung elastischer Beschichtungen. Polyetherprepolymere weisen in der Regel sehr niedrige Viskositäten auf, sind aber aufgrund ihrer schlechten Wetterbeständigkeit - eine Folge oxidativen Polyetherkettenabbaus - für Außenanwendungen nur bedingt geeignet (U. Meier-Westhues, Polyurethane - Lacke, Kleb- und Dichtstoffe, Hannover: Vincentz Network 2007, S. 50).

NCO-Prepolymere auf Basis von aromatenfreien Polyesterpolyolen führen dagegen zu Beschichtungen mit guter WitterungsStabilität und hohem Glanz. Dies gilt sowohl für Prepolymere auf Basis von Polyesterpolyolen, die durch Polykondensation von aliphatischen Di- und Polycarbonsäuren bzw. deren Anhydriden mit überschüssigen Mengen an mehrfunktionellen Alkoholen hergestellt wurden, als auch für Polycaprolactonpolyole, die durch ringöffnende Kondensation von ε-Caprolacton erhalten wurden.

Allerdings weisen auch die bisher bekannten Polyesterprepolymere des HDI Nachteile auf. Während solche, die unter Verwendung von Kondensationsprodukten linearer Dicarbonsäuren hergestellt wurden, erheblich höhere Viskositäten besitzen als vergleichbare Polyetherprepolymere oder bei Raumtemperatur sogar fest sind, zeigen Polycaprolactonpolyesterprepolymere des HDI zwar vergleichsweise niedrige Viskositäten aber auch eine starke Kristallisationstendenz, die insbesondere bei kühlen Umgebungsbedingungen zu einer raschen Eintrübung und Verfestigung führen.

Isocyanatfunktionelle HDI-Polyesterprepolymere, die sämtliche Anforderungen der Praxis erfüllen, insbesondere eine für die handwerkliche Verarbeitung ausreichend niedrige Viskosität bei gleichzeitig geringer Kristallisationsneigung aufweisen, und die zu elastischen, mechanisch hoch belastbaren Beschichtungen führen, sind bisher nicht bekannt.

Aufgabe der vorliegenden Erfindung war es daher, neue isocyanatfunktionelle Polyesterprepolymere zur Verfügung zu stellen, die nicht mit den Nachteilen des Standes der Technik behaftet sind. Diese neuen NCO-Prepolymere sollten auch bei niedrigen Temperaturen keine Tendenz zu Eintrüben oder Kristallisation zeigen, ausreichend niedrige Viskositäten aufweisen, um lösemittelfrei verarbeiten werden zu können und rasch bei den unterschiedlichsten Umgebungsbedingungen zu elastischen, licht- und wetterbeständigen Beschichtungen aushärten.

Diese Aufgabe konnte mit der Bereitstellung der nachfolgend näher beschriebenen erfindungsgemäßen isocyanatfunktionellen HDI-Polyesterprepolymere bzw. des Verfahrens zu ihrer Herstellung gelöst werden.

Die vorliegende Erfindung basiert auf der überraschenden Beobachtung, dass sich eng definierte Gemische von Polycaprolactonpolyestem und Polyesterpolyolen aus aliphatischen Dicarbonsäuren und speziellen verzweigten aliphatischen Diolen mit HDI und auch mit Pentamethylendiisocyanat (1,5-Diisocyanatopentan, PDI) zu isocyanatfunktionellen Prepolymeren umsetzen lassen, die sich bei Temperaturen oberhalb 5°C völlig kristallisationsstabil verhalten und sich dabei durch äußerst niedrige Viskositäten auszeichnen.

Dabei werden unter dem Begriff "verzweigte Diole" im Rahmen der vorliegenden Erfindung Diole der allgemeinen Formel

HO-X-OH

verstanden, in welcher X für einen verzweigten Alkyl oder Alkenylrest mit 3 bis 36 Kohlenstoffatomen steht.

Zwar werden beispielsweise in der EP-A 1 499 653, der WO 03/106527 oder der US 2002/0077444 als geeignete Aufbaukomponenten für monomerarme NCO-Prepolymere Diisocyanate, wie z. B. HDI, neben anderen Polyolen auch Polyesterpolyole aus Dicarbonsäuren oder Polycaprolactonpolyester genannt, in keiner dieser Veröffentlichungen findet sich jedoch ein konkreter Hinweis auf die erfindungsgemäß besonders vorteilhafte Kombination von ε-Caprolacton-Polyestem und Polyesterpolyolen auf Basis von verzweigten aliphatischen Diolen zur Herstellung besonders niedrigviskoser, kristallisationsstabiler Polyesterprepolymere.

Gegenstand der vorliegenden Erfindung sind Isocyanatgruppen aufweisende Prepolymere mit einem NCO-Gehalt von 2,8 bis 18,0 Gew.-%, einer mittleren Isocyanatfunktionalität von 1,9 bis 3,0 und einer nach DIN EN ISO 3219 gemessenen Viskosität von max. 3000 mPas bei 23°C, erhältlich durch Umsetzung von 1,5-Diisocyanatopentan und/oder 1,6-Diisocyanatohexan mit
A) mindestens einem Polyesterpolyol einer mittleren Funktionalität von 1,9 bis 2,3 und einem zahlenmittleren Molekulargewicht von 300 bis 3000 g/mol, hergestellt aus aliphatischen Dicarbonsäuren und/oder deren Anhydriden mit überschüssigen Mengen an mehrfunktionellen Alkoholen, wobei es sich bei den mehrfunktionellen Alkoholen zu mindestens 30 Gew.-% bezogen auf die Gesamtmenge an mehrfunktionellen Alkoholen um verzweigte aliphatische Diole handelt, und
B) mindestens einem Polycaprolactonpolyester einer mittleren Funktionalität von 2,0 bis 3,0 und einem zahlenmittleren Molekulargewicht von 176 bis 2000 g/mol,
dadurch gekennzeichnet, dass der Anteil der Polyesterkomponente A) an der in den Prepolymeren eingebauten Gesamtmenge an Polyesterkomponenten A) und B) von 15 bis 70 Gew.-% beträgt.

Gegenstand der Erfindung ist auch ein Verfahren zur Herstellung solcher Isocyanatgruppen aufweisenden Prepolymere sowie ihre Verwendung als Ausgangskomponenten bei der Herstellung von Polyurethankunststoffen, insbesondere als Vernetzerkomponenten oder Bestandteil von Vernetzerkomponenten für Polyole und/oder Polyamine in Zweikomponenten Polyurethan- und/oder Polyharnstofflacken und -beschichtungen.

Bei der Herstellung der erfindungsgemäßen isocyanatfunktionellen Prepolymere kommen als Ausgangsdiisocyanate PDI und/oder HDI, die nach beliebigen Verfahren, z. B. durch Phosgenierung in der Flüssigphase oder Gasphase oder auf phosgenfreiem Weg, beispielsweise durch Urethanspaltung, erhalten werden können.

Diese Ausgangsdiisocyanate werden erfindungsgemäß mit zwei unterschiedlichen Polyesterpolyolkomponenten A) und B) umgesetzt.

Polyesterkomponente A) besteht aus mindestens einem Polyesterpolyol, das durch Polykondensation von aliphatischen Dicarbonsäuren und/oder deren Anhydriden mit überschüssigen Mengen an mehrfunktionellen Alkoholen hergestellt wurde und eine mittlere OH-Funktionalität von 1,9 bis 2,3, vorzugsweise von 1,9 bis 2,1, besonders bevorzugt von 2,0, und ein zahlenmittleres Molekulargewicht von 300 bis 3000 g/mol, vorzugsweise von 350 bis 2000 g/mol, besonders bevorzugt von 400 bis 1000 g/mol, aufweist, wobei es sich bei den mehrfunktionellen Alkoholen zu mindestens 30 Gew.-% bezogen auf die Gesamtmenge an eingesetzten mehrfunktionellen Alkoholen um verzweigte aliphatische Diole handelt.

Derartige Polyesterpolyole sind bekannt. Ihre Herstellung erfolgt in an sich bekannter Weise nach Methoden wie sie beispielsweise in "Ullmanns Encyclopädie der Technischen Chemie", Verlag Chemie Weinheim, 4. Auflage (1980), Band 19, Seiten 61ff. oder von H. Wagner und H.F. Sarx in "Lackkunstharze", Carl Hanser Verlag, München (1971), Seiten 86 bis 152 ausführlich beschrieben sind. Gegebenenfalls können dabei katalytische Mengen üblicher Veresterungskatalysatoren, wie z. B. Säuren, Basen oder Übergangsmetallverbindungen, wie z.B. Titantetrabutylat, zum Einsatz gelangen. Die Veresterungsreaktion wird im allgemeinen in einem Temperaturbereich von ca. 80 bis 260°C, vorzugsweise von 100 bis 230°C, so lange durchgeführt bis die angestrebten Werte für Hydroxyl- und Säurezahl erreicht sind.

Ausgangsverbindungen zur Herstellung der erfindungsgemäß einzusetzenden Polyesterpolyole A) sind beliebige linearaliphatische oder cycloaliphatische, gesättigte oder ungesättigte Dicarbonsäuren oder deren Anhydride mit 4 bis 12 Kohlenstoffatomen, vorzugsweise mit 4 bis 6 Kohlenstoffatomen, sowie mehrwertige aliphatische oder cycloaliphatische Alkohole, vorzugsweise Diole und Triole, mit 2 bis 18 Kohlenstoffatomen, vorzugsweise 2 bis 6 Kohlenstoffatomen.

Geeignete Dicarbonsäuren bzw. Anhydride zur Herstellung der Polyesterpolyole A) sind beispielsweise Bernsteinsäure, Bernsteinsäureanhydrid, Glutarsäure, Adipinsäure, Pimelinsäure, Korksäure, Azelainsäure, Sebacinsäure, Decandicarbonsäure, Maleinsäure, Maleinsäureanhydrid, Fumarsäure, Itaconsäure, Itaconsäureanhydrid, Hexahydrophthalsäure, Hexahydrophthalsäureanhydrid, Tetrahydrophthalsäure und Tetrahydrophthalsäureanhydrid, die sowohl einzeln als auch in Form beliebiger Gemische untereinander verwendet werden können.

Geeignete mehrfunktionelle Alkohole zur Herstellung der Polyesterpolyole A) sind beispielsweise 1,2-Ethandiol, 1,3-Propandiol, 1,4-Butandiol, 1,5-Pentandiol, 1,6-Hexandiol, 1,7-Heptandiol, 1,8-Octandiol, 1,9-Nonandiol, 1,10-Decandiol, 1,12-Dodecandiol, 1,2- und 1,4-Cyclohexandiol, 1,4-Cyclohexandimethanol, 4,4'-(1-Methylethyliden)-biscyclohexanol, 1,2,3-Propantriol (Glycerin), 1,1,1-Trimethylolethan, 1,2,6-Hexantriol, 1,1,1-Trimethylolpropan, 2,2-Bis(hydroxymethyl)-1,3-propandiol, niedermolekulare Polyetherdiole, wie z. B. Diethylenglykol und Dipropylenglykol, und verzweigte aliphatische Diole, wie z. B. 1,2-Propandiol, 1,3-Butandiol, 2-Methylpropandiol, 2,2-Dimethyl-1,3-propandiol (Neopentylglykol), 1,2-Hexandiol, 2-Methylpentan-2,4-diol, 3-Methyl-1,5-pentandiol, 2-Ethyl-1,3-hexandiol, 1,2-Octandiol, 2,2,4-Trimethyl-1,5-pentandiol, 2-Butyl-2-ethyl-1,3-propandiol, 2,2,4- und/oder 2,4,4-Trimethylhexandiol, 1,2-Decandiol oder beliebige Gemische solcher Alkohole. Erfindungsgemäß handelt es sich bei den mehrfunktionellen Alkoholen zu mindestens 30 Gew.-%, vorzugsweise mindestens 35 Gew.-%, besonders bevorzugt mindestens 40 Gew.-%, bezogen auf die Gesamtmenge an eingesetzten mehrfunktionellen Alkoholen um verzweigte aliphatische Diole der genannten Art.

Bevorzugte Polyesterpolyole A) sind solche auf Basis von Bernsteinsäure und/oder Adipinsäure, 1,2-Ethandiol, 1,4-Butandiol, 1,6-Hexandiol, Glycerin, 1,1,1-Trimethylolpropan, sowie den verzweigten aliphatischen Diolen 1,3-Butandiol, Neopentylglykol, 2-Butyl-2-ethyl-1,3-propandiol, 2,2,4-Trimethyl-1,5-pentandiol und 2,2,4- und/oder 2,4,4-Trimethylhexandiol als alkoholischen Aufbaukomponenten, wobei der Anteil an verzweigten aliphatischen Diolen an der Gesamtmenge an eingesetzten mehrfunktionellen Alkoholen den vorstehend gemachten Angaben entspricht.

Polyesterkomponente B) besteht aus mindestens einem Polyesterpolyol einer mittleren Funktionalität von 2,0 bis 3,0, vorzugsweise von 2,0 bis 2,5, besonders bevorzugt von 2,0, und einem zahlenmittleren Molekulargewicht von 176 bis 2200 g/mol, vorzugsweise von 200 bis 2000 g/mol, besonders bevorzugt von 230 bis 1600 g/mol, wie es in an sich bekannter Weise aus ε-Caprolacton und einfachen mehrwertigen Alkoholen als Startermolekülen unter Ringöffnung erhalten werden kann wurde.

Als Startermoleküle für die ringöffnende Polymerisation können beispielsweise die oben als geeignete Ausgangsverbindungen zur Herstellung der Polyesterpolyole A) beispielhaft genannten di- oder trifunktionellen Alkohole oder beliebige Gemische dieser Alkohole dienen.

Die Herstellung der ε-Caprolactonpolyesterpolyole B) durch ringöffnende Polymerisation erfolgt im allgemeinen in Gegenwart von Katalysatoren wie beispielsweise Lewis- oder Brönstedt-Säuren, organischen Zinn- oder Titanverbindungen bei Temperaturen von 20 bis 200°C, vorzugsweise 50 bis 200°C.

Bevorzugte Polyesterpolyole B) sind solche, die unter Verwendung von 1,4-Butandiol, Diethylenglykol, Neopentylglykol, 1,6-Hexandiol, Glycerin und/oder 1,1,1-Trimethylolpropan als Startermolekül hergestellt wurden.

Zur Durchführung des erfindungsgemäßen Verfahrens werden die Ausgangsdiisocyanate PDI und/oder HDI vorzugsweise mit den Polyesterpolyole A) und B) bei Temperaturen von 20 bis 200 °C, vorzugsweise 40 bis 160 °C, besonders bevorzugt 60 bis 140°C, unter Einhaltung eines Äquivalentverhältnisses von Isocyanatgruppen zu Hydroxylgruppen von 4 : 1 bis 200 : 1, vorzugsweise von 5 : 1 bis 50 : 1, besonders bevorzugt von 5 : 1 bis 40 : 1, umgesetzt.

Das erfindungsgemäße Verfahren kann unkatalysiert durchgeführt werden. Gegebenenfalls können zur Beschleunigung der Urethanisierungsreaktion aber auch geeignete Katalysatoren zum Einsatz gelangen. Hierbei handelt es sich um die üblichen aus der Polyurethanchemie bekannten Katalysatoren, beispielsweise um tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3 -butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,8-Diazabicyclo(5.4.0)undecen-7 (DBU), 1,2-Dimethylimidazol, 2-Methylimidazol, N,N-Dimethylimidazol-ß-phenylethylamin, 1,4-Diazabicyclo-(2,2,2)-octan, Bis-(N,N-dimethylaminoethyl)adipat; um Alkanolaminverbindungen, wie z. B. Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N, N',N"-Tris-(dimethylaminopropyl)-s-hexahydrotriazin und/oder Bis(dimethylaminoethyl)ether; um Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)- Wismut(III)-2-ethylhexanoat, Wis-mut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat; um Amidine, wie z. B. 2,3-Dimethyl-3,4,5,6-tetrahydropyrimidin; um Tetraalkylammoniumhydroxide, wie z. B. Tetramethylammoniumhydroxid; um Alkalihydroxide, wie z. B. Natriumhydroxid und Alkalialkoholate, wie z. B. Natriummethylat und Kaliumisopropylat, sowie Alkalisalze von langkettigen Fettsäuren mit 10 bis 20 C-Atomen und gegebenenfalls seitenständigen OH-Gruppen.

Diese Katalysatoren kommen beim erfindungsgemäßen Verfahren, falls überhaupt, bevorzugt in einer Menge von 0,001 bis 5 Gew.-%, besonders bevorzugt 0,005 bis 1 Gew.-%, bezogen auf das Gesamtgewicht aller Reaktionspartner zum Einsatz und können sowohl vor Reaktionsbeginn als auch zu jedem Zeitpunkt der Reaktion zugesetzt werden.

Das erfindungsgemäße Verfahren wird vorzugsweise lösemittelfrei durchgeführt. Gegebe-nenfalls können aber auch geeignete, gegenüber den reaktiven Gruppen der Ausgangskom-ponenten inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder - ethyletheracetat, 1-Methoxypropyl-2-acetat, 3-Methoxy-n-butylacetat, Aceton, 2 Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar®, Varsol® (ExxonMobil Chemical Central Europe, Köln, DE) und Shellsol® (Shell Deutschland Oil GmbH, Hamburg, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

In einer möglichen Ausführungsform wird beim erfindungsgemäßen Verfahren das Ausgangsdiisocyanat PDI und/oder HDI gegebenenfalls unter Inertgas, wie beispielsweise Stickstoff, gegebenenfalls in Anwesenheit eines Katalysators der oben genannten Art und gegebenenfalls in Gegenwart eines geeigneten Lösungsmittels der genannten Art bei einer Temperatur zwischen 20 und 120°C vorgelegt. Anschließend werden die Polyolkomponenten A) und B) als Gemisch oder in beliebiger Reihenfolge nacheinander in der oben angegebenen Menge zugegeben und die Reaktionstemperatur für die Urethanisierung gegebenenfalls durch eine geeignete Maßnahme (Heizen oder Kühlen) auf eine Temperatur von 20 bis 200 °C, vorzugsweise 40 bis 160 °C, besonders bevorzugt 60 bis 140°C, eingestellt.

Der Verlauf der Umsetzung kann beim erfindungsgemäßen Verfahren durch z. B. titrimetrische Bestimmung des NCO-Gehaltes verfolgt werden. Nach Erreichen des angestrebten NCO-Gehaltes, vorzugsweise wenn im Reaktionsgemisch der einem vollständigen Umsatz von Isocyanat- und Hydroxylgruppen theoretisch entsprechende NCO-Gehalt erreicht ist, werden gegebenenfalls mitverwendete Urethanisierungskatalysatoren vorzugsweise durch Zugabe geeigneter Katalysatorgifte deaktiviert.

Solche Katalysatorgifte sind beispielsweise anorganische Säuren wie Salzsäure, phosphorige Säure oder Phosphorsäure, Säurechloride wie Acetylchlorid, Benzoylchlorid oder Isophthaloyldichlorid, Sulfonsäuren und Sulfonsäureester, wie Methansulfonsäure, p-Toluolsulfonsäure, Trifluormethansulfonsäure, Perfluorbutansulfonsäure, Dodecylbenzolsulfonsäure, p-Toluolsulfonsäuremethylester und -ethylester, Mono- und Dialkylphosphate wie Monotridecylphosphat, Dibutylphosphat und Dioctylphosphat aber auch silylierte Säuren, wie Methansulfonsäuretrimethylsilylester, Trifluormethansulfonsäuretrimethylsilylester, Phosphorsäure-tris-(trimethylsilylester) und Phosphorsäurediethylester-trimethylsilylester.

Die zur Deaktivierung des Katalysators benötigte Menge an Katalysatorgift richtet sich dabei nach der Menge des verwendeten Katalysators. Im allgemeinen wird eine äquivalente Menge des Katalysatorgiftes, bezogen auf den zu Beginn eingesetzten Urethanisierungskatalysator, eingesetzt. Berücksichtigt man allerdings eventuell während der Reaktion auftretende Katalysatorverluste, so können zur Reaktionsstoppung auch schon 20 bis 80 Äquivalent-% des Katalysatorgiftes, bezogen auf die ursprünglich eingesetzte Katalysatormenge, ausreichen.

Im Anschluss an die gegebenenfalls erforderliche Deaktivierung des Katalysators wird das Reaktionsgemisch vorzugsweise durch Dünnschichtdestillation im Hochvakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von flüchtigen Bestandteilen (überschüssigen monomeren Diisocyanaten, gegebenenfalls mitverwendeten Lösungsmitteln und, bei Verzicht auf den Einsatz eines Katalysatorgiftes, gegebenenfalls aktivem Katalysator) befreit.

Die anfallenden Destillate, die neben den nicht umgesetzten monomeren Ausgangsdiisocya-naten, gegebenenfalls mitverwendete Lösungsmittel bei Verzicht auf den Einsatz eines Ka-talysatorgiftes gegebenenfalls aktiven Katalysator enthalten, können problemlos zur erneuten Prepolymerisierung verwendet werden.

In einer anderen möglichen Ausführungsform des erfindungsgemäßen Verfahrens werden die Ausgangsdiisocyanate nicht mit einem Gemisch der beiden Polyesterpolyole A) und B) sondern in zwei getrennten Reaktionen mit den jeweiligen Einzelkomponenten A) und B) unter den vorstehend genannten Reaktionsbedingungen umgesetzt. Bei dieser Art der Durchführung des erfindungsgemäßen Verfahrens erfolgt die eigentliche Herstellung der erfindungemäßen Prepolymere durch einfaches Abmischen der unter ausschließlicher Verwendung von Polyesterpolyolen A) und unter ausschließlicher Verwendung von Polyesterpolyolen B) erhaltenen Prepolymere im Anschluss an deren Synthese.

Gegenstand der vorliegenden Erfindung ist daher auch ein Verfahren zur Herstellung von Isocyanatgruppen aufweisenden Prepolymeren mit einem NCO-Gehalt von 2,8 bis 18,0 Gew.-%, einer mittleren Isocyanatfunktionalität von 1,9 bis 3,0 und einer nach DIN EN ISO 3219 gemessenen Viskosität von max. 3000 mPas bei 23°C, dadurch gekennzeichnet, dass 1,5-Diisocyanatopentan und/oder 1,6-Diisocyanatohexan in getrennten Reaktionen mit
A) mindestens einem Polyesterpolyol einer mittleren Funktionalität von 1,9 bis 2,3 und einem zahlenmittleren Molekulargewicht von 300 bis 3000 g/mol, hergestellt aus aliphatischen Dicarbonsäuren und/oder deren Anhydriden mit überschüssigen Mengen an mehrfunktionellen Alkoholen, wobei es sich bei den mehrfunktionellen Alkoholen zu mindestens 30 Gew.-% bezogen auf die Gesamtmenge an mehrfunktionellen Alkoholen um verzweigte aliphatische Diole handelt, bzw.
B) mindestens einem Polycaprolactonpolyester einer mittleren Funktionalität von 2,0 bis 3,0 und einem zahlenmittleren Molekulargewicht von 176 bis 2000 g/mol,
bei Temperaturen von 20 bis 200 °C unter Einhaltung eines Äquivalentverhältnisses von Isocyanatgruppen zu Hydroxylgruppen von 4 : 1 bis 200 : 1 umgesetzt werden, und die so erhaltenen Prepolymere derart miteinander abgemischt werden, dass der Anteil der Polyesterkomponente A) an der Gesamtmenge der umgesetzten Polyester-komponenten A) und B) von 15 bis 70 Gew.-% beträgt.

In einer anderen möglichen Ausführungsform des erfindungsgemäßen Verfahrens werden die Ausgangsdiisocyanate in mehreren Einzelreaktionen zwar mit Gemischen der beiden Polyesterpolyole A) und B) unter den vorstehend genannten Reaktionsbedingungen umgesetzt, wobei die Reaktionspartner aber in solchen Mengenverhältnisse vorliegen, dass bezüglich der vorstehend definierten Mindestmenge an verzweigten Diolen in Polyesterkomponente A) und/oder des Anteils der Komponente A) an der Gesamtmenge der Polyesterkomponenten A) und B) zunächst keine erfindungsgemäßen Prepolymere erhalten werden. Die eigentliche Herstellung erfindungemäßer Prepolymere erfolgt bei dieser Art der Durchführung des erfindungsgemäßen Verfahrens durch Abmischen dieser nicht erfindungsgemäßen Prepolymere untereinander oder auch mit nicht erfindungsgemäßen Prepolymeren, die unter ausschließlicher Verwendung von Polyesterpolyolen A) und/oder unter ausschließlicher Verwendung von Polyesterpolyolen B) hergestellt wurden, in solchen Mengen, dass Prepolymere resultieren, die den obengenannten Kennzeichen genügen.

Gegenstand der vorliegenden Erfindung ist daher auch ein Verfahren zur Herstellung von Isocyanatgruppen aufweisenden Prepolymeren mit einem NCO-Gehalt von 2,8 bis 18,0 Gew.-%, einer mittleren Isocyanatfunktionalität von 1,9 bis 3,0 und einer nach DIN EN ISO 3219 gemessenen Viskosität von max. 3000 mPas bei 23°C, dadurch gekennzeichnet, dass 1,5-Diisocyanatopentan und/oder 1,6-Diisocyanatohexan in mehreren Einzelreaktionen mit Gemischen von
A) mindestens einem Polyesterpolyol einer mittleren Funktionalität von 1,9 bis 2,3 und einem zahlenmittleren Molekulargewicht von 300 bis 3000 g/mol, hergestellt aus aliphatischen Dicarbonsäuren und/oder deren Anhydriden mit überschüssigen Mengen an mehrfunktionellen Alkoholen, wobei es sich bei den mehrfunktionellen Alkoholen zu mindestens 30 Gew.-% bezogen auf die Gesamtmenge an mehrfunktionellen Alkoholen um verzweigte aliphatische Diole handelt, mit
B) mindestens einem Polycaprolactonpolyester einer mittleren Funktionalität von 2,0 bis 3,0 und einem zahlenmittleren Molekulargewicht von 176 bis 2000 g/mol,
bei Temperaturen von 20 bis 200 °C unter Einhaltung eines Äquivalentverhältnisses von Isocyanatgruppen zu Hydroxylgruppen von 4 : 1 bis 200 : 1 umgesetzt werden, und die so erhaltenen Prepolymere derart miteinander abgemischt werden, dass der Anteil der Polyesterkomponente A) an der Gesamtmenge der umgesetzten Polyester-komponenten A) und B) von 15 bis 70 Gew.-% beträgt.

Schließlich ist es auch möglich, nicht erfindungsgemäße Prepolymere der vorstehend beschriebenen Art auf Basis von Polyesterkomponenten A) und/oder B) erfindungsgemäßen Prepolymeren in solchen Mengen zuzumischen, dass die Mischungen weiterhin die oben für erfindungsgemäße Prepolymere formulierten Bedingungen erfüllen.

Gegenstand der vorliegenden Erfindung ist daher ebenfalls ein Verfahren zur Herstellung von Isocyanatgruppen aufweisenden Prepolymeren mit einem NCO-Gehalt von 2,8 bis 18,0 Gew.-%, einer mittleren Isocyanatfunktionalität von 1,9 bis 3,0 und einer nach DIN EN ISO 3219 gemessenen Viskosität von max. 3000 mPas bei 23°C, dadurch gekennzeichnet, dass 1,5-Diisocyanatopentan und/oder 1,6-Diisocyanatohexan in getrennten Reaktionen mit
i) einem Gemisch/Gemischen von
   A) mindestens einem Polyesterpolyol einer mittleren Funktionalität von 1,9 bis 2,3 und einem zahlenmittleren Molekulargewicht von 300 bis 3000 g/mol, hergestellt aus aliphatischen Dicarbonsäuren und/oder deren Anhydriden mit überschüssigen Mengen an mehrfunktionellen Alkoholen, wobei es sich bei den mehrfunktionellen Alkoholen zu mindestens 30 Gew.-% bezogen auf die Gesamtmenge an mehrfunktionellen Alkoholen um verzweigte aliphatische Diole handelt, mit
   B) mindestens einem Polycaprolactonpolyester einer mittleren Funktionalität von 2,0 bis 3,0 und einem zahlenmittleren Molekulargewicht von 176 bis 2000 g/mol,
   und
ii) mindestens einem Polyesterpolyol gemäß A,
   und/oder
iii) mindestens einem Polyesterpolyol gemäß B,
bei Temperaturen von 20 bis 200 °C unter Einhaltung eines Äquivalentverhältnisses von Isocyanatgruppen zu Hydroxylgruppen von 4 : 1 bis 200 : 1 umgesetzt werden, und die so erhaltenen Prepolymere derart miteinander abgemischt werden, dass der Anteil der Polyesterkomponente A) an der Gesamtmenge der umgesetzten Polyester-komponenten A) und B) von 15 bis 70 Gew.-% beträgt.

Umfasst das gewählte Verfahren zur Herstellung der erfindungsgemäßen Prepolymere einen wie vorstehend beschriebenen Abmischschritt, kann dieser zu einem beliebigen Zeitpunkt sowohl vor als auch nach der Abtrennung flüchtiger Bestandteile, wie z. B. überschüssiger monomerer Diisocyanate, aus den Reaktionsgemischen einzelner Prepolymere beispielsweise durch Dünnschichtdestillation erfolgen.

Unabhängig von der Art des gewählten Herstellverfahrens - einer direkten Herstellung aus einem Gemisch von Polyesterkomponenten A) und B) oder einer Herstellung durch Abmischen separat synthetisierter Prepolymere - werden die Mengen der eingesetzten Ausgangsstoffe, insbesondere der Polyesterkomponenten A) und B), so gewählt, dass in den resultierenden erfindungsgemäßen Prepolymeren der Anteil der Polyesterkomponente A) bezogen auf die Gesamtmenge der eingesetzten Polyesterkomponenten A) und B) von 15 bis 70 Gew.-%, vorzugsweise von 20 bis 65 Gew.-%, besonders bevorzugt von 25 bis 60 Gew.-%, beträgt.

Unabhängig von der Art ihrer Herstellung stellen die erfindungsgemäßen Verfahrensprodukte klare, praktisch farblose NCO-Prepolymere dar, die in der Regel Farbzahlen von unter 120 APHA, vorzugsweise von unter 80 APHA, besonders bevorzugt von unter 60 APHA, und einen NCO-Gehalt von 2,8 bis 17,0 Gew.-%, vorzugsweise 3,8 bis 14,0 Gew.-%, besonders bevorzugt 6,0 bis 13,0 Gew.-%, und mittlere NCO-Funktionalität von 1,9 bis 3,0, vorzugsweise von 1,9 bis 2,5, besonders bevorzugt von 2,0 bis 2,2, ganz besonders bevorzugt 2,0 aufweisen.

Die erfindungsgemäßen NCO-Prepolymere zeichnen sich für Polyesterprepolymere durch sehr niedrige Viskositäten (nach DIN EN ISO 3219) von maximal 3000 mPas bei 23°C, vorzugsweise von 600 bis 2500 mPas, besonders bevorzugt von 1000 bis 2000 mPas, aus. Gleichzeitig verhalten sich völlig kristallisationsstabil und zeigen auch bei niedrigen Temperaturen, beispielsweise bei 5°C, keinerlei Tendenz zur Eintrübung oder Verfestigung.

Diese Eigenschaftskombination macht die erfindungsgemäßen Verfahrensprodukte ganz besonders prädestiniert für Aussenanwendungen, beispielsweise im Baubereich, bei denen auch bei niedrigen Umgebungstemperaturen für eine handwerkliche Verarbeitbarkeit ausreichend niedrige Viskositäten und geringe Kristallisationsneigung gefordert sind.

Die erfindungsgemäßen Polyesterprepolymere stellen wertvolle Ausgangsmaterialien zur Herstellung von Polyurethan-, Polythiourethan- und/oder Polyharnstoff-Kunststoffen nach dem Isocyanat-Polyadditionsverfahren dar.

Sie können dabei lösemittelfrei eingesetzt werden, lassen sich bei Bedarf aber auch mit üblichen Lösemitteln, beispielsweise den obengenannten, beim erfindungsgemäßen Verfahren gegebenenfalls mitzuverwendenden inerten Lacklösemitteln, trübungsfrei verdünnen.

Die erfindungsgemäßen Prepolymere eignen sich in hervorragender Weise als Vernetzerkomponenten für Zweikomponenten-Polyurethanlacke, in denen als Polyhydroxylverbindungen die üblichen Polyetherpolyole, Polyesterpolyole Polycarbonatpolyole und/oder Polyacrylatpolyole als Reaktionspartner für die Polyisocyanate vorliegen. Als Polyole esonders bevorzugte Reaktionspartner für die erfindungsgemäßen Verfahrensprodukte sind Hydroxylgruppen aufweisende Polyacrylate, d. h. Polymerisate bzw. Copolymerisate von (Meth)acrylsäurealkylestern, gegebenenfalls mit Styrol oder anderen copolymerisierbaren olefinisch ungesättigten Monomeren.

Im Allgemeinen besitzen die mit den erfindungsgemäßen Prepolymeren formulierten Beschichtungsmittel, denen gegebenenfalls die auf dem Lacksektor üblichen Hilfs- und Zusatzmittel, wie z. B. Verlaufshilfsmittel, Farbpigmente, Füllstoffe oder Mattierungsmittel, einverleibt werden können, schon bei Raumtemperaturtrocknung gute lacktechnische Eigenschaften. Selbstverständlich lassen sie sich jedoch auch unter forcierten Bedingungen bei erhöhter Temperatur bzw. durch Einbrennen bei Temperaturen bis 260 °C trocknen.

Zur Steuerung der Aushärtegeschwindigkeit können bei der Formulierung der Beschichtungsmittel geeignete Katalysatoren mitverwendet werden, beispielsweise die in der Iso-cyanatchemie üblichen Urethanisierungskatalysatoren, wie sie z. B. vorstehend bereits als Katalysatoren zur Herstellung der erfindungsgemäßen Prepolymere beschrieben wurden.

Selbstverständlich können die erfindungsgemäßen Prepolymere auch in mit aus der Polyurethanchemie an sich bekannten Blockierungsmitteln blockierter Form in Kombination mit den obengenannten Lackbindemitteln oder Lackbindemittelkomponenten im Sinne von Einkomponenten-PUR-Einbrennsystemen eingesetzt werden. Geeignete Blockierungsmittel sind beispielsweise Malonsäurediethylester, Acetessigester, aktivierte cyclische Ketone, wie z. B. Cyclopentanon-2-carboxymethylester und carboxyethylester, Acetonoxim, Butanonoxim, ε-Caprolactam, 3,5-Dimethylpyrazol, 1,2,4-Triazol, Dimethyl-1,2,4-triazol, Imidazol, Benzyl-tert.-butylamin oder beliebige Gemische dieser Blockierungsmittel.

Die erfindungsgemäßen Polyesterprepolymere können besonders vorteilhaft auch mit Polyaminen, wie z. B. den aus EP-B 0 403 921 bekannten Polyasparaginsäurederivaten, oder auch solchen Polyaminen, deren Aminogruppen in blockierter Form vorliegen, wie z. B. Polyketiminen, Polyaldiminen oder Oxazolanen, kombiniert werden. Aus diesen blockierten Aminogruppen entstehen unter Feuchtigkeitseinfluß freie Aminogruppen und im Falle der Oxazolane auch freie Hydroxylgruppen, die unter Vernetzung mit den Prepolymeren abreagieren.

Zur Herstellung von Beschichtungen oder Formkörpern beonders hoher Lichtbrechung können die erfindungsgemäßen Thioallophaatpolyisocyanate auch mit beliebigen Polythiolen, insbesondere Polythioether- und Polyesterthiolen, wie z. B. 4-Mercaptomethyl-1,8-dimercapto-3,6-dithiaoctan, 2,5 -Bismercaptomethyl-1,4-dithian, 1,1,3,3-Tetrakis(mercaptomethylthio)propan, 5,7-Dimercaptomethyl-1,11-dimercapto-3,6,9-trithiaundecan, 4,7-Dimercaptomethyl-1,11-dimercapto-3,6,9-trithiaundecan, 4,8-Dimercaptomethyl-1,11-dimercapto-3,6,9-trithiaundecan, Trimethylolpropan-tris(3 -mercaptopropionat), Trimethylolethan-tris(2-mercaptoacetat), Pentaerythrit-tetrakis(2-mercaptoacetat) und Pentaerythrit-tetrakis(3-mercaptopropionat), zu Polythiourethanen umgesetzt werden.

In allen vorstehend beschriebenen Verwendungen der erfindungsgemäßen Prepolymere können diese sowohl alleine als auch, z. B. zur Erhöhung der Vernetzungsdichte, in Abmischung mit beliebigen weiteren Polyisocyanaten mit aliphatisch, cycloaliphatisch, araliphatisch und/oder aromatisch gebun-denen Isocyanatgruppen, insbesondere den bekannten Lackpolyisocyanaten mit Uretdion-, Isocyanurat-, Iminooxadiazindion-, Urethan-, Allophanat-, Biuret- und/oder Oxadiazintrion-struktur, wie sie beispielhaft in Laas et al., J. Prakt. Chem. 336, 1994, 185-200, der DE-A 1 670 666, DE-A 3 700 209, DE-A 3 900 053, EP-A 0 330 966, EP-A 0 336 205, EP-A 0 339 396 und EP-A 0 798 299 beschrieben sind, als Isocyanatkomponente zum Einsatz kommen.

In Zweikomponenten Polyurethan- und/oder Polyharnstofflacken und -beschichtungen, die als Vernetzerkomponenten oder Bestandteil von Vernetzerkomponenten für Polyole, Polythiole und/oder Polyamine die erfindungsgemäßen Prepolymere enthalten, liegen die Reaktionspartner üblicherweise in solchen Mengen vor, dass auf jede gegebenenfalls blockierte Isocyanatgruppe 0,5 bis 3, vorzugsweise 0,6 bis 2,0, besonders bevorzugt 0,8 bis 1,6 gegebenenfalls blockierte, gegenüber Isocyanaten reaktive Gruppen entfallen.

Als Untergründe für die mit Hilfe der erfindungsgemäßen Prepolymeren formulierten Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Weitere Gegenstände dieser Erfindung sind somit Beschichtungsmittel enthaltend die erfindungsgemäßen Prepolymere, sowie die mit diesen Beschichtungsmitteln beschichteten Substrate.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

Die Rest-Monomerengehalte wurden nach DIN EN ISO 10283 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219.

Der für die Ausgangspolyester A) angegebene prozentuale Anteil an verzweigten aliphatischen Diolen bezieht sich jeweils auf die Gesamtmenge der bei der Polyestersynthese eingesetzten mehrfunktionellen Alkohole.

Die für die Ausgangspolyester A) und B) angegebenen zahlenmittleren Molekulargewichte wurden jeweils aus OH-Zahl und OH-Funktionalität berechnet.

Die für die erfindungsgemäßen Verfahrensprodukte angegebenen prozentualen Anteile an Polyesterkomponente A) beziehen sich jeweils auf die eingesetzte Gesamtmenge an Polyesterkomponenten A) und B).

Die Trocknungszeiten (dry-hard time) wurden mit Hilfe eines Circular Drying Time Recorders der Fa. Gardner nach DIN EN ISO 9117-4 bestimmt.

Die Glasübergangstemperatur Tg wurde mittels DSC (Differential Scanning Calorimetrie) mit einem Mettler DSC 12E (Mettler Toledo GmbH, Giessen, DE) bei einer Aufheizgeschwindigkeit von 10 °C/min bestimmt.

Shore-Härten wurden nach DIN 53505 mit Hilfe eines Shore-Härteprüfgerätes Zwick 3100 (Fa. Zwick, DE) gemessen.

Der Weiterreißwiderstand der erhaltenen Beschichtungen wurde an freien Filmen nach DIN ISO 34-1 bestimmt. Ebenfalls an freien Filmen wurden Bruchdehnung und Bruchspannung nach DIN EN ISO 527-1 ermittelt.

### Ausgangsverbindungen

### Polyesterpolyol A1)

17,2 Gew.-Teile Neopentylglykol, 13,3 Gew.-Teile 1,4-Butandiol, 17,5 Gew.-Teile 1,6-Hexandiol, 4,4 Gew.-Teilen 2,2,4-Trimethyl-1,3-pentandiol, 4,4 Gew.-Teilen 2-Butyl-2-ethyl-1,3-propandiol und 43,2 Gew.-Teile Adipinsäure wurden in einem Kolben eingewogen und in Gegenwart von 25 ppm Zinn(II)-chlorid als Katalysator bei Normaldruck langsam unter Rühren auf 200°C erwärmt, wobei ca. 5 Gew.-Teile Wasser abdestillierten. Nach Ende der Wasserabspaltung wurde im Verlauf von ca. 4 Stunden langsam Vakuum (15 mbar) angelegt und die Reaktion unter diesen Bedingungen innerhalb von weiteren ca. 15 Stunden vervollständigt. Das auf diese Weise erhaltene Polyesterpolyol wies die folgenden Kenndaten auf:

| | |
|---|---|
| OH-Zahl: | 260 mg KOH/g |
| Säurezahl: | 0,2 mg KOH/g |
| OH-Funktionalität: | 2,0 |
| mittleres Molekulargewicht: | 431 g/mol |
| Viskosität (25°C): | 810 mPas |
| Anteil an verzweigten Diolen: | 56,8 % |

### Polyesterpolyol A2)

Aus 53,5 Gew.-Teilen Neopentylglykol, 1,1 Gew.-Teile 1,2-Ethandiol und 45,4 Gew.-Teilen Adipinsäure wurde nach dem für A1) beschriebenen Verfahren ein Polyesterpolyol mit folgenden Kenndaten hergestellt:

| | |
|---|---|
| OH-Zahl: | 227 mg KOH/g |
| Säurezahl: | 1,4 mg KOH/g |
| OH-Funktionalität: | 2,0 |
| mittleres Molekulargewicht: | 495 g/mol |
| Viskosität (25°C): | 2600 mPas |
| Anteil an verzweigten Diolen: | 98,0 % |

### Polyesterpolyol A3)

Aus 17,4 Gew.-Teilen Neopentylglykol, 29,9 Gew.-Teile 1,6-Hexandiol und 52,7 Gew.-Teilen Adipinsäure wurde nach dem für A1) beschriebenen Verfahren ein Polyesterpolyol mit folgenden Kenndaten hergestellt:

| | |
|---|---|
| OH-Zahl: | 56 mg KOH/g |
| Säurezahl: | 0,8 mg KOH/g |
| OH-Funktionalität: | 2,0 |
| mittleres Molekulargewicht: | 2000 g/mol |
| Viskosität (25°C): | 3200 mPas |
| Anteil an verzweigten Diolen: | 36,8 % |

### Polyesterpolyol A4)

Aus 16,1 Gew.-Teilen Neopentylglykol, 12,5 Gew.-Teilen 1,4-Butandiol, 4,1 Gew.-Teilen 2,2,4-Trimethyl-1,3-pentandiol, 4,1 Gew.-Teilen 2-Butyl-2-ethyl-1,3-propandiol, 16,4 Gew.-Teilen 1,6-Hexandiol, 6,3 Gew.-Teilen 1,1,1-Trimethylolpropan und 40,5 Gew.-Teilen Adipinsäure wurde nach dem für A1) beschriebenen Verfahren ein Polyesterpolyol mit folgenden Kenndaten hergestellt:

| | |
|---|---|
| OH-Zahl: | 327 mg KOH/g |
| Säurezahl: | 2,2 mg KOH/g |
| OH-Funktionalität: | 2,2 |
| mittleres Molekulargewicht: | 377 g/mol |
| Viskosität (25°C): | 970 mPas |
| Anteil an verzweigten Diolen: | 40,8 % |

### Polyesterpolyol A5) (nicht erfindungsgemäß)

Aus 36,6 Gew.-Teilen 1,2-Ethandiol und 63,4 Gew.-Teilen Adipinsäure wurde nach dem für A1) beschriebenen Verfahren ein Polyesterpolyol mit folgenden Kenndaten hergestellt:

| | |
|---|---|
| OH-Zahl: | 179 mg KOH/g |
| Säurezahl: | 0,6 mg KOH/g |
| OH-Funktionalität: | 2,0 |
| mittleres Molekulargewicht: | 625 g/mol |
| Schmelzbereich: | 27 - 31°C |
| Viskosität (50°C): | 320 mPas |
| Anteil an verzweigten Diolen: | 0,0 % |

### Polyesterpolyol A6) (nicht erfindungsgemäß)

Aus 52,1 Gew.-Teilen 1,6-Hexandiol und 47,9 Gew.-Teilen Adipinsäure wurde nach dem für A1) beschriebenen Verfahren ein Polyesterpolyol mit folgenden Kenndaten hergestellt:

| | |
|---|---|
| OH-Zahl: | 134 mg KOH/g |
| Säurezahl: | 0,8 mg KOH/g |
| OH-Funktionalität: | 2,0 |
| mittleres Molekulargewicht: | 835 g/mol |
| Schmelzbereich: | 35 - 45°C |
| Viskosität (50°C): | 450 mPas |
| Anteil an verzweigten Diolen: | 0,0 % |

### Polyesterpolyol B1)

Auf 1,6-Hexandiol gestarteter ε-Caprolacton-Polyester

| | |
|---|---|
| OH-Zahl: | 172 mg KOH/g |
| OH-Funktionalität: | 2,0 |
| mittleres Molekulargewicht: | 650 g/mol |
| Schmelzbereich: | 20 - 30°C |
| Viskosität (50°C): | 80 mPas |

### Polyesterpolyol B2)

Auf einem Gemisch aus 60 Gew.-Teilen Diethylenglykol und 40 Gew.-Teilen Glycerin gestarteter ε-Caprolacton -Polyester

| | |
|---|---|
| OH-Zahl: | 560 mg KOH/g |
| OH-Funktionalität: | 2,4 |
| mittleres Molekulargewicht: | 240 g/mol |
| Schmelzbereich: | 0-10°C |
| Viskosität (50°C): | 40 mPas |

### Polyesterpolyol B3)

Auf Neopentylglykol gestarteter ε-Caprolacton-Polyester

| | |
|---|---|
| OH-Zahl: | 70 mg KOH/g |
| OH-Funktionalität: | 2,0 |
| mittleres Molekulargewicht: | 1600 g/mol |
| Schmelzbereich: | 35 - 50°C |
| Viskosität (50°C): | 300 mPas |

### Beispiel 1 (erfindungsgemäß)

1260 g (7,5 mol) Hexamethylendiisocyanat (HDI) wurden bei einer Temperatur von 100°C unter trockenem Stickstoff und Rühren vorgelegt und innerhalb von 90 min mit einem Gemisch aus 142 g (0,33 mol) Polyesterpolyol A1) und 110 g (0,17 mol) Polyesterpolyol B1) versetzt. Nach beendeter Zugabe wurde das Reaktionsgemisch bei 110°C weiter gerührt, bis nach ca. 3 Stunden der einer vollständigen Urethanisierung entsprechende NCO-Gehalt von 38,9 % erreicht war.

Das nicht umgesetzte monomere HDI wurde bei einer Temperatur von 130°C und einem Druck von 0,1 mbar im Dünnschichtverdampfer abgetrennt. Man erhielt 390 g eines farblosen klaren Prepolymers, das folgende Kenndaten und Zusammensetzung aufwies:

| | |
|---|---|
| NCO-Gehalt: | 9,1 % |
| monomeres HDI: | 0,08 % |
| Viskosität (23°C): | 1920 mPas |
| mittlere NCO-Funktionalität (ber.): | 2,0 |
| Anteile an Polyester A): | 56,3 % |

### Beispiel 2 (nicht erfindungsgemäß, Vergleich)

Nach dem in Beispiel 1 beschriebenen Verfahren wurden 1260 g (7,5 mol) HDI mit 215 g (0,5 mol) Polyesterpolyol A1) umgesetzt. Nach Erreichen eines NCO-Gehaltes von 39,8 % wurde nicht umgesetztes HDI im Dünnschichtverdampfer abgetrennt. Man erhielt 382 g eines farblosen klaren Prepolymers, das folgende Kenndaten aufwies:

| | |
|---|---|
| NCO-Gehalt: | 10,3 % |
| monomeres HDI: | 0,07 % |
| Viskosität (23°C): | 3840 mPas |
| mittlere NCO-Funktionalität (ber.): | 2,0 |
| Anteile an Polyester A): | 100 % |

Das Beispiel zeigt, dass das unter ausschließlicher Verwendung eines Polyesterpolyols A1) zwar ein flüssiges klares HDI-Prepolymer erhalten wird, das allerdings eine für eine problemlose handwerkliche Verarbeitung zu hohe Viskosität aufweist.

### Beispiel 3 (nicht erfindungsgemäß, Vergleich)

Nach dem in Beispiel 1 beschriebenen Verfahren wurden 1260 g (7,5 mol) HDI mit 325 g (0,5 mol) Polyesterpolyol B1) umgesetzt. Nach Erreichen eines NCO-Gehaltes von 37,1 % wurde nicht umgesetztes HDI im Dünnschichtverdampfer abgetrennt. Man erhielt 488 g eines farblosen, anfangs klaren Prepolymers, das nach wenigen Stunden bei Raumtemperatur eintrübte und sich verfestigte. Das teilkristalline Produkt wies die folgenden Kenndaten auf:

| | |
|---|---|
| NCO-Gehalt: | 8,1 % |
| monomeres HDI: | 0,08 % |
| Viskosität (23°C): | n. b. |
| mittlere NCO-Funktionalität (ber.): | 2,0 |
| Anteile an Polyester A): | 0 % |

### Beispiel 4 (erfindungsgemäß)

270 g (0,33 mol) des Prepolymers aus Beispiel 2 wurden mit 175 g (0,17 mol) des Prepolymers aus Beispiel 3 unter trockenem Stickstoff vorgelegt und durch einstündiges Rühren bei einer Temperatur von 50 °C homogenisiert. Man erhielt 445 g eines farblosen klaren Prepolymergemisches, das folgende Kenndaten aufwies:

| | |
|---|---|
| NCO-Gehalt: | 9,4 % |
| monomeres HDI: | 0,07 % |
| Viskosität (23°C): | 1850 mPas |
| mittlere NCO-Funktionalität (ber.): | 2,0 |
| Anteile an Polyester A): | 56,8 % |

Zur Überprüfung der Tieftemperaturstabilität wurden die niedrigviskosen klaren Polyesterprepolymere aus Beispiel 1 und 4 eine Woche lang im Kühlschrank bei einer Temperatur von 5 °C gelagert. Im Gegensatz zum Prepolymer aus Beispiel 3, das bereits bei Raumtemperatur eintrübt, blieben die kühl gelagerten Proben völlig klar und transparent.

### Beispiele 5 bis 14 (erfindungsgemäß und Vergleich)

Nach dem in Beispiel 1 beschriebenen Verfahren wurden unter Verwendung unterschiedlicher Polyesterkomponenten A) und/oder B) HDI-Prepolymere hergestellt. Tabelle 1 zeigt die Mengen der dabei jeweils eingesetzten Reaktionspartner sowie Kenndaten und Eigenschaften der erhaltenen Produkte.

Die Überprüfung der Tieftemperaturstabilität erfolgte, wie in Beispiel 4 beschrieben, durch einwöchige Lagerung im Kühlschrank bei einer Temperatur von 5 °C und anschließende visuelle Begutachtung.

**Tabelle 1**

| **Beispiel** | **5** | **6** | **7** | **8** | **9** | **10 Vergleic h** | **11** | **12 Vergleic h** | **13 Vergleic h** | **14 Vergleic h** |
|---|---|---|---|---|---|---|---|---|---|---|
| HDI | 1260 | 1260 | 1260 | 1260 | 1210 | 1330 | 1260 | 1260 | 1260 | 1260 |
| Polyesterpolyol A1) | - | - | - | - | - | - | 165 | 175 | - | - |
| Polyesterpolyol A2) | 89 | 189 | - | - | - | - | - | - | - | - |
| Polyesterpolyol A3) | - | - | - | - | 21 | 18 | - | - | - | - |
| Polyesterpolyol A4) | - | - | 82 | 144 | - | - | - | - | - | - |
| Polyesterpolyol A5) | - | - | - | - | - | - | - | - | 120 | - |
| Polyesterpolyol A6) | - | - | - | - | - | - | - | - | - | 100 |
| Polyesterpolyol B1) | 208 | - | 168 | - | - | - | 77 | 60 | 200 | 247 |
| Polyesterpolyol B2) | - | - | - | - | 118 | 130 | - | - | - | - |
| Polyesterpolyol B3) | - | 189 | - | 124 | - | - | - | - | - | - |
| NCO : OH [val] | 15 : 1 | 15 : 1 | 15 : 1 | 15 : 1 | 12 : 1 | 12 : 1 | 15 : 1 | 15 : 1 | 15 : 1 | 15 : 1 |
| NCO-Gehalt [%] | 8,5 | 7,3 | 9,6 | 9,0 | 12,4 | 12,3 | 9,6 | 9,8 | 8,2 | 7,9 |
| monomeres HDI [%] | 0,05 | 0,07 | 0,11 | 0,08 | 0,07 | 0,12 | 0,05 | 0,06 | 0,07 | 0,10 |
| NCO-Funktionalität (ber.): | 2,0 | 2,0 | 2,3 | 2,3 | 2,5 | 2,5 | 2,0 | 2,0 | 2,0 | 2,0 |
| Viskosität [mPas/23°C]: | 2540 | 2760 | 1850 | 2880 | 2620 | 2400 | 2870 | 3280 | 5780 | 5450 |
| Anteile an Polyester A) [%] | 30,0 | 50,0 | 32,8 | 53,7 | 15,1 | 12,2 | 68,2 | 74,4 | 37,5 | 28,8 |
| Tieftemperaturlagerung [1] | i. O. | i. O. | i. O. | i. O. | i. O. | trüb | i. O. | i. O. | trüb | trüb |

### Beispiel 15 (erfindungsgemäß)

150 g (0,22 mol) des nicht erfindungsgemäßen Prepolymers aus Beispiel 10 wurden mit 350 g (0,41 mol) des nicht erfindungsgemäßen Prepolymers aus Beispiel 12 unter trockenem Stickstoff vorgelegt und durch einstündiges Rühren bei einer Temperatur von 50 °C homogenisiert. Man erhielt 500 g eines farblosen klaren Prepolymergemisches, das folgende Kenndaten aufwies:

| | |
|---|---|
| NCO-Gehalt: | 10,5 % |
| monomeres HDI: | 0,09 % |
| Viskosität (23°C): | 2780 mPas |
| mittlere NCO-Funktionalität (ber.): | 2,0 |
| Anteile an Polyester A): | 55,7 % |

Zur Überprüfung der Tieftemperaturstabilität wurden das Produkt eine Woche lang im Kühlschrank bei einer Temperatur von 5 °C gelagert. Die Probe zeigte keine Trübungen sondern blieb völlig klar und transparent.

### Beispiel 16 (erfindungsgemäß)

400 g (0,40 mol) des erfindungsgemäßen Prepolymers aus Beispiel 5 wurden mit 100 g (0,10 mol) des nicht erfindungsgemäßen Prepolymers aus Beispiel 13 unter trockenem Stickstoff vorgelegt und durch einstündiges Rühren bei einer Temperatur von 50 °C homogenisiert. Man erhielt 500 g eines farblosen klaren Prepolymergemisches, das folgende Kenndaten aufwies:

| | |
|---|---|
| NCO-Gehalt: | 8,4 % |
| monomeres HDI: | 0,06 % |
| Viskosität (23°C): | 2920 mPas |
| mittlere NCO-Funktionalität (ber.): | 2,0 |
| Anteile an Polyester A): | 31,5 % |
| Anteil verzweigter Diole: | 83,9 % |

Zur Überprüfung der Tieftemperaturstabilität wurden das Produkt eine Woche lang im Kühlschrank bei einer Temperatur von 5 °C gelagert. Die Probe zeigte keine Trübungen sondern blieb völlig klar und transparent.

### Beispiel 17 (erfindungsgemäß)

Nach dem in Beispiel 1 beschriebenen Verfahren wurden 1155 g (7,5 mol) 1,5-Diisocyanatopentan (PDI) mit einem Gemisch aus 142 g (0,33 mol) Polyesterpolyol A1) und 110 g (0,17 mol) Polyesterpolyol B1) entsprechend einem Äquivalentverhältnis von NCO : OH von 15 : 1 umgesetzt. Nach Erreichen eines NCO-Gehaltes von 41,8 % wurde nicht umgesetztes PDI bei einer Temperatur von 130°C und einem Druck von 0,1 mbar im Dünnschichtverdampfer abgetrennt. Man erhielt 405 g eines farblosen klaren Prepolymers, das folgende Kenndaten und Zusammensetzung aufwies:

| | |
|---|---|
| NCO-Gehalt: | 9,9 % |
| monomeres PDI: | 0,05 % |
| Viskosität (23°C): | 2050 mPas |
| mittlere NCO-Funktionalität (ber.): | 2,0 |
| Anteile an Polyester A): | 56,3 % |

Eine Probe des so erhaltenen PDI-Prepolymers wurde zur Überprüfung der Tieftemperaturstabilität eine Woche lang im Kühlschrank bei einer Temperatur von 5 °C gelagert. Die Probe zeigte keine Trübungen sondern blieb völlig klar und transparent.

### Beispiel 18 (Verwendung, erfindungsgemäß und Vergleich)

Aus den nachfolgend aufgeführten Rohstoffen wurde in den angegebenen Mengenverhältnissen durch 10 minütiges Vordispergieren mit Hilfe eines Dissolvers unter Kühlung eine aminofunktionelle Bindemittelkomponente hergestellt:

| | |
|---|---|
| Desmophen NH 1420 ¹⁾ | 80,0 Gew.-Teile |
| Desmophen NH 2850 XP ²⁾ | 20,0 Gew.-Teile |
| Sylosiv A4 ³⁾ | 2,0 Gew.-Teile |
| Tego Airex 944 ⁴⁾ | 1,0 Gew.-Teile |
| Tego Wet 250 ⁵⁾ | 0,2 Gew.-Teile |

| | |
|---|---|
| ¹⁾ Polyasparaginsäureester, difunktionell (Lieferform 100 %, Äquivalentgewicht: 276 g/val NH), Bayer MaterialScience AG, 51368 Leverkusen, Deutschland ²⁾ Polyasparaginsäureester, difunktionell (Lieferform 100 %, Äquivalentgewicht: 290 g/val NH), Bayer MaterialScience AG, 51368 Leverkusen, Deutschland ³⁾ Mikronisiertes kristallines Aluminiumsilikat, Molekularsieb, GRACE Davison, 67547 Worms, Deutschland ⁴⁾ Entlüfter, Evonik Industries AG, 45127 Essen, Deutschland ⁵⁾ Benetzungsadditiv, Evonik Industries AG, 45127 Essen, Deutschland | |

Zur Herstellung eines verarbeitungsfertigen erfindungsgemäßen Beschichtungsmittels wurden dieser Bindemittelkomponente 139,5 Gew.-Teile eines Vernetzergemisches folgender Zusammensetzung zugesetzt und gut eingearbeitet:

| | |
|---|---|
| Prepolymer aus Beispiel 1 | 80,0 Gew.-Teile |
| Desmodur N 3600 ⁶⁾ | 20,0 Gew.-Teile |

| | |
|---|---|
| ⁶⁾ Niedrigviskoses HDI-Trimerisat (Lieferform 100 %, NCO-Gehalt: 23,0 %, Äquivalentgewicht: 183 g/val NCO, Viskosität (23°C): 1200 mPas), Bayer MaterialScience AG, 51368 Leverkusen, Deutschland | |

Zum Vergleich wurden in einem zweiten Lackansatz der gleichen Bindemittelkomponente ausschließlich 72,0 Gew.-Teile des niedrigviskosen HDI-Trimerisates Desmodur N 3600 zugesetzt und ebenfalls gut eingearbeitet. In beiden Beschichtungsmitteln betrug das Äquivalentverhältnis von Isocyanatgruppen zu Aminogruppen jeweils 1,1 : 1.

Die beiden so formulierten lösemittelfreien Lacke, die vergleichbare Topfzeiten von ca. 2 Stunden aufwiesen, wurden mit einem Rakel jeweils in einer Nassfilm-Schichtdicke von ca. 400 µm auf Glasplatten aufgebracht und bei Raumtemperatur (ca. 23°C) ausgehärtet. Tabelle 2 stellt noch einmal die Zusammensetzungen und lacktechnischen Eigenschaften der beiden Beschichtungen gegenüber.

Deutliche Unterschiede zeigten sich in den mechanische Eigenschaften der beiden Beschichtungen. Wie die in Tabelle 2 dargestellten Ergebnisse zeigen, besitzt das erfindungsgemäße, unter Verwendung des Prepolymers aus Beispiel 1 hergestellte Beschichtungsmittel gegenüber einem konventionell, d. h. ausschließlich mit einem niedrigviskosen Polyisocyanat vernetzten System erheblich höhere Elastizitäten, weshalb es sich ganz besonders zur Herstellung rissüberbrückender Beschichtungen eignet.

**Tabelle 2**

| **Beispiel 18** | | | **erfindungsgemäß** | **Vergleich** |
|---|---|---|---|---|
| Desmophen NH 1420 | | [Gew.-Teile] | 80,0 | 80,0 |
| Desmophen NH 2850 XP | | [Gew.-Teile] | 20,0 | 20,0 |
| Prepolymer aus Beispiel 1 | | [Gew.-Teile] | 111,6 | - |
| Desmodur N 3600 | | [Gew.-Teile] | 27,9 | 72,1 |
| Sylosiv A4 | | [Gew.-Teile] | 2,0 | 2,0 |
| Tego Airex 944 | | [Gew.-Teile] | 1,0 | 1,0 |
| Tego Wet 250 | | [Gew.-Teile] | 0,2 | 0,2 |
| Verarbeitungszeit [h:min] | | | 1:35 | 0:45 |
| Gardner Trockenzeit [h:min] | | | 3:40 | 2:10 |
| Shore A / D | nach 3 d bei 23°C | | 45 / <20 | - / 69 |
| | nach 14 d bei 23°C | | 51 / <20 | - / 72 |
| | nach 3 d bei 23°C + 3 d bei 50°C | | 45 / <20 | - / 70 |
| Tg [°C] | | 1. Aufheizung | 15,5 | 54,2 |
| | | 2. Aufheizung | 21,5 | 59,5 |
| | | 3. Aufheizung | 21,0 | 58,8 |
| Weiterreißwiderstand | | [N/mm] | 11,6 | 8,5 |
| nominelle Bruchdehnung | | [%] | 329 | 103 |
| Bruchspannung | | [MPa] | 10,4 | 12,3 |

### Beispiel 19 (Verwendung)

Aus den nachfolgend aufgeführten Rohstoffen wurde in den angegebenen Mengenverhältnissen durch 10 minütiges Vordispergieren mit Hilfe eines Dissolvers unter Kühlung eine aminofunktionelle Bindemittelkomponente hergestellt:

| | |
|---|---|
| Desmophen NH 1420 ¹⁾ | 100,0 Gew.-Teile |
| Sylosiv A4 ³⁾ | 2,0 Gew.-Teile |
| Tego Airex 944 ⁴⁾ | 1,0 Gew.-Teile |
| Tego Wet 250 ⁵⁾ | 0,2 Gew.-Teile |

| | |
|---|---|
| ^{1) - 5)} siehe Beispiel 16 | |

Zur Herstellung eines verarbeitungsfertigen erfindungsgemäßen Beschichtungsmittels wurden dieser Bindemittelkomponente 152,2 Gew.-Teile eines Vernetzergemisches folgender Zusammensetzung, entsprechend einem NCO : NH-Äquivalentverhältnis von 1,1 : 1, zugesetzt und gut eingearbeitet:

| | |
|---|---|
| Prepolymer aus Beispiel 1 | 85,0 Gew.-Teile |
| Desmodur N 3400 ⁷⁾ | 15,0 Gew.-Teile |

| | |
|---|---|
| ⁷⁾ Niedrigviskoses Uretdiongruppen enthaltendes HDI-Polyisocyanat (Lieferform 100 %, NCO-Gehalt: 21,8 %, Äquivalentgewicht: 193 g/val NCO, Viskosität (23°C): 175 mPas), Bayer MaterialScience AG, 51368 Leverkusen, Deutschland | |

Der auf diese Weise erhaltene lösemittelfreie Lack, der eine Topfzeiten von ca. 90 Minuten aufwies, wurde mit einem Rakel in einer Naßfilm-Schichtdicke von ca. 400 µm auf eine Glasplatte aufgebracht und bei Raumtemperatur (ca. 23°C) ausgehärtet. Tabelle 3 zeigt die lacktechnischen Eigenschaften der Beschichtungen.

**Tabelle 3**

| Gardner Trockenzeit [h:min] | | | 3:00 |
|---|---|---|---|
| Shore A / D | nach 3 d bei 23°C | | 59 / <20 |
| | nach 14 d bei 23°C | | 54 / <20 |
| | nach 3 d bei 23°C + 3 d bei 50°C | | 51 / <20 |
| Tg [°C] | | 1. Aufheizung | -7,5 |
| | | 2. Aufheizung | 3,0 |
| | | 3. Aufheizung | 5,0 |
| Weiterreißwiderstand | | [N/mm] | 11,3 |
| nominelle Bruchdehnung | | [%] | 295 |
| Bruchspannung | | [MPa] | 5,7 |

## Patentansprüche

1. Verfahren zur Herstellung von Isocyanatgruppen aufweisenden Prepolymeren mit einem NCO-Gehalt von 2,8 bis 18,0 Gew.-%, einer mittleren Isocyanatfunktionalität von 1,9 bis 3,0 und einer nach DIN EN ISO 3219 gemessenen Viskosität von max. 3000 mPas bei 23°C, **dadurch gekennzeichnet, dass** 1,5-Diisocyanatopentan und/oder 1,6-Diisocyanatohexan mit
A) mindestens einem Polyesterpolyol einer mittleren Funktionalität von 1,9 bis 2,3 und einem zahlenmittleren Molekulargewicht von 300 bis 3000 g/mol, hergestellt aus aliphatischen Dicarbonsäuren und/oder deren Anhydriden mit überschüssigen Mengen an mehrfunktionellen Alkoholen, wobei es sich bei den mehrfunktionellen Alkoholen zu mindestens 30 Gew.-% bezogen auf die Gesamtmenge an mehrfunktionellen Alkoholen um verzweigte aliphatische Diole handelt, und
B) mindestens einem Polycaprolactonpolyester einer mittleren Funktionalität von 2,0 bis 3,0 und einem zahlenmittleren Molekulargewicht von 176 bis 2000 g/mol,
bei Temperaturen von 20 bis 200 °C unter Einhaltung eines Äquivalentverhältnisses von Isocyanatgruppen zu Hydroxylgruppen von 4 : 1 bis 200 : 1 umgesetzt werden, wobei der Anteil der Polyesterkomponente A) an der Gesamtmenge der umgesetzten Polyesterkomponenten A) und B) von 15 bis 70 Gew.-% beträgt.

2. Verfahren gemäß Anspruch 1, wobei die Polyolkomponenten A) und B) als Gemisch oder in beliebiger Reihenfolge nacheinander mit dem/den Diisocyanat/en umgesetzt werden.

3. Verfahren zur Herstellung von Isocyanatgruppen aufweisenden Prepolymeren mit einem NCO-Gehalt von 2,8 bis 18,0 Gew.-%, einer mittleren Isocyanatfunktionalität von 1,9 bis 3,0 und einer nach DIN EN ISO 3219 gemessenen Viskosität von max. 3000 mPas bei 23°C, **dadurch gekennzeichnet, dass** 1,5-Diisocyanatopentan und/oder 1,6-Diisocyanatohexan in getrennten Reaktionen mit
A) mindestens einem Polyesterpolyol einer mittleren Funktionalität von 1,9 bis 2,3 und einem zahlenmittleren Molekulargewicht von 300 bis 3000 g/mol, hergestellt aus aliphatischen Dicarbonsäuren und/oder deren Anhydriden mit überschüssigen Mengen an mehrfunktionellen Alkoholen, wobei es sich bei den mehrfunktionellen Alkoholen zu mindestens 30 Gew.-% bezogen auf die Gesamtmenge an mehrfunktionellen Alkoholen um verzweigte aliphatische Diole handelt, bzw.
B) mindestens einem Polycaprolactonpolyester einer mittleren Funktionalität von 2,0 bis 3,0 und einem zahlenmittleren Molekulargewicht von 176 bis 2000 g/mol,
bei Temperaturen von 20 bis 200 °C unter Einhaltung eines Äquivalentverhältnisses von Isocyanatgruppen zu Hydroxylgruppen von 4 : 1 bis 200 : 1 umgesetzt werden, und die so erhaltenen Prepolymere derart miteinander abgemischt werden, dass der Anteil der Polyesterkomponente A) an der Gesamtmenge der umgesetzten Polyester-komponenten A) und B) von 15 bis 70 Gew.-% beträgt.

4. Verfahren zur Herstellung von Isocyanatgruppen aufweisenden Prepolymeren mit einem NCO-Gehalt von 2,8 bis 18,0 Gew.-%, einer mittleren Isocyanatfunktionalität von 1,9 bis 3,0 und einer nach DIN EN ISO 3219 gemessenen Viskosität von max. 3000 mPas bei 23°C, **dadurch gekennzeichnet, dass** 1,5-Diisocyanatopentan und/oder 1,6-Diisocyanatohexan in mehreren Einzelreaktionen mit Gemischen von
A) mindestens einem Polyesterpolyol einer mittleren Funktionalität von 1,9 bis 2,3 und einem zahlenmittleren Molekulargewicht von 300 bis 3000 g/mol, hergestellt aus aliphatischen Dicarbonsäuren und/oder deren Anhydriden mit überschüssigen Mengen an mehrfunktionellen Alkoholen, wobei es sich bei den mehrfunktionellen Alkoholen zu mindestens 30 Gew.-% bezogen auf die Gesamtmenge an mehrfunktionellen Alkoholen um verzweigte aliphatische Diole handelt, mit
B) mindestens einem Polycaprolactonpolyester einer mittleren Funktionalität von 2,0 bis 3,0 und einem zahlenmittleren Molekulargewicht von 176 bis 2000 g/mol,
bei Temperaturen von 20 bis 200 °C unter Einhaltung eines Äquivalentverhältnisses von Isocyanatgruppen zu Hydroxylgruppen von 4 : 1 bis 200 : 1 umgesetzt werden, und die so erhaltenen Prepolymere derart miteinander abgemischt werden, dass der Anteil der Polyesterkomponente A) an der Gesamtmenge der umgesetzten Polyester-komponenten A) und B) von 15 bis 70 Gew.-% beträgt.

5. Verfahren zur Herstellung von Isocyanatgruppen aufweisenden Prepolymeren mit einem NCO-Gehalt von 2,8 bis 18,0 Gew.-%, einer mittleren Isocyanatfunktionalität von 1,9 bis 3,0 und einer nach DIN EN ISO 3219 gemessenen Viskosität von max. 3000 mPas bei 23°C, **dadurch gekennzeichnet, dass** 1,5-Diisocyanatopentan und/oder 1,6-Diisocyanatohexan in getrennten Reaktionen mit
i) einem Gemisch/Gemischen von
A) mindestens einem Polyesterpolyol einer mittleren Funktionalität von 1,9 bis 2,3 und einem zahlenmittleren Molekulargewicht von 300 bis 3000 g/mol, hergestellt aus aliphatischen Dicarbonsäuren und/oder deren Anhydriden mit überschüssigen Mengen an mehrfunktionellen Alkoholen, wobei es sich bei den mehrfunktionellen Alkoholen zu mindestens 30 Gew.-% bezogen auf die Gesamtmenge an mehrfunktionellen Alkoholen um verzweigte aliphatische Diole handelt, mit
B) mindestens einem Polycaprolactonpolyester einer mittleren Funktionalität von 2,0 bis 3,0 und einem zahlenmittleren Molekulargewicht von 176 bis 2000 g/mol,
und
ii) mindestens einem Polyesterpolyol gemäß A,
und/oder
iii) mindestens einem Polyesterpolyol gemäß B,
bei Temperaturen von 20 bis 200 °C unter Einhaltung eines Äquivalentverhältnisses von Isocyanatgruppen zu Hydroxylgruppen von 4 : 1 bis 200 : 1 umgesetzt werden, und die so erhaltenen Prepolymere derart miteinander abgemischt werden, dass der Anteil der Polyesterkomponente A) an der Gesamtmenge der umgesetzten Polyester-komponenten A) und B) von 15 bis 70 Gew.-% beträgt.

6. Verfahren zur Herstellung Isocyanatgruppen aufweisender Prepolymere gemäß einem der Ansprüche 1 bis 5, **dadurch gekennzeichnet, dass** der Anteil der Polyesterkomponente A) bezogen auf die Gesamtmenge der eingesetzten Polyesterkomponenten A) und B) 20 bis 65 Gew.-% beträgt.

7. Verfahren zur Herstellung Isocyanatgruppen aufweisender Prepolymere gemäß einem der Ansprüche 1 bis 6, **dadurch gekennzeichnet, dass** es sich bei den zur Herstellung der Komponente A) eingesetzten verzweigten aliphatischen Diolen um solche der allgemeinen Formel
HO-X-OH
handelt, in welcher X für einen verzweigten Alkyl- oder Alkenylrest mit 3 bis 36 C Atomen steht.

8. Verfahren zur Herstellung Isocyanatgruppen aufweisender Prepolymere gemäß einem der Ansprüche 1 bis 6, **dadurch gekennzeichnet, dass** es sich bei Komponente A) um Polyesterpolyole auf Basis von Bernsteinsäure und/oder Adipinsäure, 1,2-Ethandiol, 1,4-Butandiol, 1,6-Hexandiol, Glycerin und/oder 1,1,1-Trimethylolpropan, sowie den verzweigten aliphatischen Diolen 1,3-Butandiol, Neopentylglykol, 2-Butyl-2-ethyl-1,3-propandiol, 2,2,4-Trimethyl-1,5-pentandiol und 2,2,4- und/oder 2,4,4-Trimethylhexandiol handelt.

9. Verfahren zur Herstellung Isocyanatgruppen aufweisender Prepolymere gemäß einem der Ansprüche 1 bis 8, **dadurch gekennzeichnet, dass** es sich bei Komponente B) um Polyesterpolyole handelt, die durch ringöffnende Polymerisation aus ε-Caprolacton unter Verwendung von 1,4-Butandiol, Diethylenglykol, Neopentylglykol, 1,6-Hexandiol, Glycerin und/oder 1,1,1-Trimethylolpropan als Startermolekül hergestellt wurden.

10. Verfahren zur Herstellung Isocyanatgruppen aufweisender Prepolymere gemäß einem der Ansprüche 1 bis 9, **dadurch gekennzeichnet, dass** man im Anschluss an die Umsetzung bzw. Abmischung überschüssige, nicht umgesetzte monomere Diisocyanate durch Dünnschichtdestillation von den Isocyanatgruppen aufweisenden Prepolymeren abtrennt.

11. Isocyanatgruppen aufweisende Prepolymere mit einem NCO-Gehalt von 2,8 bis 18,0 Gew.-%, einer mittleren Isocyanatfunktionalität von 1,9 bis 3,0 und einer nach DIN EN ISO 3219 gemessenen Viskosität von max. 3000 mPas bei 23°C, erhältlich nach einem Verfahren gemäß einem der Ansprüche 1 bis 10.

12. Verwendung der Isocyanatgruppen aufweisenden Prepolymere gemäß Anspruch 11 als Ausgangskomponenten bei der Herstellung von Polyurethankunststoffen.

13. Beschichtungsmittel enthaltend Isocyanatgruppen aufweisenden Prepolymere gemäß Anspruch 11.

14. Mit Beschichtungsmitteln gemäß Anspruch 13 beschichtete Substrate.

15. Formkörper enthaltend Isocyanatgruppen aufweisenden Prepolymere gemäß Anspruch 11.

## Claims

1. Process for preparing prepolymers having isocyanate groups and having an NCO content of 2.8% to 18.0% by weight, a mean isocyanate functionality of 1.9 to 3.0 and a viscosity, measured to DIN EN ISO 3219, of max. 3000 mPas at 23°C, **characterized in that** 1,5-diisocyanatopentane and/or 1,6-diisocyanatohexane are reacted with
A) at least one polyester polyol of mean functionality from 1.9 to 2.3 and of number-average molecular weight from 300 to 3000 g/mol, prepared from aliphatic dicarboxylic acids and/or anhydrides thereof with excess amounts of polyfunctional alcohols, where the polyfunctional alcohols are branched aliphatic diols to an extent of at least 30% by weight, based on the total amount of polyfunctional alcohols, and
B) at least one polycaprolactone polyester of mean functionality from 2.0 to 3.0 and number-average molecular weight from 176 to 2000 g/mol,
at temperatures of 20 to 200°C, observing an equivalents ratio of isocyanate groups to hydroxyl groups of 4:1 to 200:1, wherein the proportion of the polyester component A) in the total amount of the polyester components A) and B) converted is from 15% to 70% by weight.

2. Process according to Claim 1, wherein the polyol components A) and B) are reacted with the diisocyanate(s) as a mixture or successively in any sequence.

3. Process for preparing prepolymers having isocyanate groups and having an NCO content of 2.8% to 18.0% by weight, a mean isocyanate functionality of 1.9 to 3.0 and a viscosity, measured to DIN EN ISO 3219, of max. 3000 mPas at 23°C, **characterized in that** 1,5-diisocyanatopentane and/or 1,6-diisocyanatohexane are reacted in separate reactions with
A) at least one polyester polyol of mean functionality from 1.9 to 2.3 and of number-average molecular weight from 300 to 3000 g/mol, prepared from aliphatic dicarboxylic acids and/or anhydrides thereof with excess amounts of polyfunctional alcohols, where the polyfunctional alcohols are branched aliphatic diols to an extent of at least 30% by weight, based on the total amount of polyfunctional alcohols, and
B) at least one polycaprolactone polyester of mean functionality from 2.0 to 3.0 and number-average molecular weight from 176 to 2000 g/mol,
at temperatures of 20 to 200°C, observing an equivalents ratio of isocyanate groups to hydroxyl groups of 4:1 to 200:1, and the prepolymers thus obtained are blended with one another in such a way that the proportion of the polyester component A) in the total amount of the polyester components A) and B) converted is from 15% to 70% by weight.

4. Process for preparing prepolymers having isocyanate groups and having an NCO content of 2.8% to 18.0% by weight, a mean isocyanate functionality of 1.9 to 3.0 and a viscosity, measured to DIN EN ISO 3219, of max. 3000 mPas at 23°C, **characterized in that** 1,5-diisocyanatopentane and/or 1,6-diisocyanatohexane are reacted in multiple individual reactions with mixtures of
A) at least one polyester polyol of mean functionality from 1.9 to 2.3 and of number-average molecular weight from 300 to 3000 g/mol, prepared from aliphatic dicarboxylic acids and/or anhydrides thereof with excess amounts of polyfunctional alcohols, where the polyfunctional alcohols are branched aliphatic diols to an extent of at least 30% by weight, based on the total amount of polyfunctional alcohols, with
B) at least one polycaprolactone polyester of mean functionality from 2.0 to 3.0 and number-average molecular weight from 176 to 2000 g/mol,
at temperatures of 20 to 200°C, observing an equivalents ratio of isocyanate groups to hydroxyl groups of 4:1 to 200:1, and the prepolymers thus obtained are blended with one another in such a way that the proportion of the polyester component A) in the total amount of the polyester components A) and B) converted is from 15% to 70% by weight.

5. Process for preparing prepolymers having isocyanate groups and having an NCO content of 2.8% to 18.0% by weight, a mean isocyanate functionality of 1.9 to 3.0 and a viscosity, measured to DIN EN ISO 3219, of max. 3000 mPas at 23°C, **characterized in that** 1,5-diisocyanatopentane and/or 1,6-diisocyanatohexane are reacted in separate reactions with
i) a mixture/mixtures of
A) at least one polyester polyol of mean functionality from 1.9 to 2.3 and of number-average molecular weight from 300 to 3000 g/mol, prepared from aliphatic dicarboxylic acids and/or anhydrides thereof with excess amounts of polyfunctional alcohols, where the polyfunctional alcohols are branched aliphatic diols to an extent of at least 30% by weight, based on the total amount of polyfunctional alcohols, with
B) at least one polycaprolactone polyester of mean functionality from 2.0 to 3.0 and number-average molecular weight from 176 to 2000 g/mol,
and
ii) at least one polyester polyol according to A,
and/or
iii) at least one polyester polymer according to B,
at temperatures of 20 to 200°C, observing an equivalents ratio of isocyanate groups to hydroxyl groups of 4:1 to 200:1, and the prepolymers thus obtained are blended with one another in such a way that the proportion of the polyester component A) in the total amount of the polyester components A) and B) converted is from 15% to 70% by weight.

6. Process for preparing prepolymers having isocyanate groups according to any of Claims 1 to 5, **characterized in that** the proportion of the polyester component A), based on the total amount of the polyester components A) and B) used, is 20% to 65% by weight.

7. Process for preparing prepolymers having isocyanate groups according to any of Claims 1 to 6, **characterized in that** the branched aliphatic diols used for preparation of component A) are those of the general formula
HO-X-OH
in which X is a branched alkyl or alkenyl radical having 3 to 36 carbon atoms.

8. Process for preparing prepolymers having isocyanate groups according to any of Claims 1 to 6, **characterized in that** component A) comprises polyester polyols based on succinic acid and/or adipic acid, ethane-1,2-diol, butane-1,4-diol, hexane-1,6-diol, glycerol and/or 1,1,1-trimethylolpropane, and the branched aliphatic diols butane-1,3-diol, neopentyl glycol, 2-butyl-2-ethylpropane-1,3-diol, 2,2,4-trimethylpentane-1,5-diol and 2,2,4- and/or 2,4,4-trimethylhexanediol.

9. Process for preparing prepolymers having isocyanate groups according to any of Claims 1 to 8, **characterized in that** component B) comprises polyester polyols which have been prepared by ring opening polymerization from ε-caprolactone using butane-1,4-diol, diethylene glycol, neopentyl glycol, hexane-1,6-diol, glycerol and/or 1,1,1-trimethylolpropane as starter molecule.

10. Process for preparing prepolymers having isocyanate groups according to any of Claims 1 to 9, **characterized in that**, after the reaction or blending, excess unconverted monomeric diisocyanates are removed by thin-film distillation of the prepolymers having isocyanate groups.

11. Prepolymers having isocyanate groups and having an NCO content of 2.8% to 18.0% by weight, a mean isocyanate functionality of 1.9 to 3.0 and a viscosity, measured to DIN EN ISO 3219, of max. 3000 mPas at 23°C, obtainable by a process according to any of Claims 1 to 10.

12. Use of the prepolymers having isocyanate groups according to Claim 11 as starting components in the production of polyurethane polymers.

13. Coating compositions comprising prepolymers having isocyanate groups according to Claim 11.

14. Substrates coated with coating compositions according to Claim 13.

15. Moldings comprising prepolymers having isocyanate groups according to Claim 11.

## Revendications

1. Procédé de fabrication de prépolymères comprenant des groupes isocyanate ayant une teneur en NCO de 2,8 à 18,0 % en poids, une fonctionnalité isocyanate moyenne de 1,9 à 3,0 et une viscosité mesurée selon DIN EN ISO 3219 d'au plus 3 000 mPas à 23 °C, **caractérisé en ce que** du 1,5-diisocyanatopentane et/ou du 1,6-diisocyanatohexane sont mis en réaction avec
A) au moins un polyester-polyol ayant une fonctionnalité moyenne de 1,9 à 2,3 et un poids moléculaire moyen en nombre de 300 à 3 000 g/mol, fabriqué à partir d'acides dicarboxyliques aliphatiques et/ou leurs anhydrides avec des quantités en excès d'alcools polyfonctionnels, les alcools polyfonctionnels consistant à hauteur d'au moins 30 % en poids, par rapport à la quantité totale d'alcools polyfonctionnels, en des diols aliphatiques ramifiés, et
B) au moins un polycaprolactone-polyester ayant une fonctionnalité moyenne de 2,0 à 3,0 et un poids moléculaire moyen en nombre de 176 à 2000 g/mol,
à des températures de 20 à 200 °C en maintenant un rapport équivalent entre les groupes isocyanates et les groupes hydroxyle de 4:1 à 200:1, la proportion du composant polyester A) par rapport à la quantité totale des composants polyester A) et B) mis en réaction étant de 15 à 70 % en poids.

2. Procédé selon la revendication 1, dans lequel les composants polyol A) et B) sont mis en réaction avec le ou les diisocyanates en mélange ou successivement dans un ordre quelconque.

3. Procédé de fabrication de prépolymères comprenant des groupes isocyanate ayant une teneur en NCO de 2,8 à 18,0 % en poids, une fonctionnalité isocyanate moyenne de 1,9 à 3,0 et une viscosité mesurée selon DIN EN ISO 3219 d'au plus 3 000 mPas à 23 °C, **caractérisé en ce que** du 1,5-diisocyanatopentane et/ou du 1,6-diisocyanatohexane sont mis en réaction dans des réactions séparées avec
A) au moins un polyester-polyol ayant une fonctionnalité moyenne de 1,9 à 2,3 et un poids moléculaire moyen en nombre de 300 à 3 000 g/mol, fabriqué à partir d'acides dicarboxyliques aliphatiques et/ou leurs anhydrides avec des quantités en excès d'alcools polyfonctionnels, les alcools polyfonctionnels consistant à hauteur d'au moins 30 % en poids, par rapport à la quantité totale d'alcools polyfonctionnels, en des diols aliphatiques ramifiés, et
B) au moins un polycaprolactone-polyester ayant une fonctionnalité moyenne de 2,0 à 3,0 et un poids moléculaire moyen en nombre de 176 à 2 000 g/mol,
à des températures de 20 à 200 °C en maintenant un rapport équivalent entre les groupes isocyanates et les groupes hydroxyle de 4:1 à 200:1, et les prépolymères ainsi obtenus sont mélangés les uns avec les autres de telle sorte que la proportion du composant polyester A) par rapport à la quantité totale des composants polyester A) et B) mis en réaction soit de 15 à 70 % en poids.

4. Procédé de fabrication de prépolymères comprenant des groupes isocyanate ayant une teneur en NCO de 2,8 à 18,0 % en poids, une fonctionnalité isocyanate moyenne de 1,9 à 3,0 et une viscosité mesurée selon DIN EN ISO 3219 d'au plus 3 000 mPas à 23 °C, **caractérisé en ce que** du 1,5-diisocyanatopentane et/ou du 1,6-diisocyanatohexane sont mis en réaction dans plusieurs réactions individuelles avec des mélanges de
A) au moins un polyester-polyol ayant une fonctionnalité moyenne de 1,9 à 2,3 et un poids moléculaire moyen en nombre de 300 à 3 000 g/mol, fabriqué à partir d'acides dicarboxyliques aliphatiques et/ou leurs anhydrides avec des quantités en excès d'alcools polyfonctionnels, les alcools polyfonctionnels consistant à hauteur d'au moins 30 % en poids, par rapport à la quantité totale d'alcools polyfonctionnels, en des diols aliphatiques ramifiés, avec
B) au moins un polycaprolactone-polyester ayant une fonctionnalité moyenne de 2,0 à 3,0 et un poids moléculaire moyen en nombre de 176 à 2000 g/mol,
à des températures de 20 à 200 °C en maintenant un rapport équivalent entre les groupes isocyanates et les groupes hydroxyle de 4:1 à 200:1, et les prépolymères ainsi obtenus sont mélangés les uns avec les autres de telle sorte que la proportion du composant polyester A) par rapport à la quantité totale des composants polyester A) et B) mis en réaction soit de 15 à 70 % en poids.

5. Procédé de fabrication de prépolymères comprenant des groupes isocyanate ayant une teneur en NCO de 2,8 à 18,0 % en poids, une fonctionnalité isocyanate moyenne de 1,9 à 3,0 et une viscosité mesurée selon DIN EN ISO 3219 d'au plus 3 000 mPas à 23 °C, **caractérisé en ce que** du 1,5-diisocyanatopentane et/ou du 1,6-diisocyanatohexane sont mis en réaction dans des réactions séparées avec
i) un ou plusieurs mélanges de
A) au moins un polyester-polyol ayant une fonctionnalité moyenne de 1,9 à 2,3 et un poids moléculaire moyen en nombre de 300 à 3 000 g/mol, fabriqué à partir d'acides dicarboxyliques aliphatiques et/ou leurs anhydrides avec des quantités en excès d'alcools polyfonctionnels, les alcools polyfonctionnels consistant à hauteur d'au moins 30 % en poids, par rapport à la quantité totale d'alcools polyfonctionnels, en des diols aliphatiques ramifiés, avec
B) au moins un polycaprolactone-polyester ayant une fonctionnalité moyenne de 2,0 à 3,0 et un poids moléculaire moyen en nombre de 176 à 2000 g/mol,
et
ii) au moins un polyester-polyol selon A,
et/ou
iii) au moins un polyester-polyol selon B,
à des températures de 20 à 200 °C en maintenant un rapport équivalent entre les groupes isocyanates et les groupes hydroxyle de 4:1 à 200:1, et les prépolymères ainsi obtenus sont mélangés les uns avec les autres de telle sorte que la proportion du composant polyester A) par rapport à la quantité totale des composants polyester A) et B) mis en réaction soit de 15 à 70 % en poids.

6. Procédé de fabrication de prépolymères comprenant des groupes isocyanate selon l'une quelconque des revendications 1 à 5, **caractérisé en ce que** la proportion du composant polyester A) par rapport à la quantité totale des composants polyester A) et B) utilisés est de 20 à 65 % en poids.

7. Procédé de fabrication de prépolymères comprenant des groupes isocyanate selon l'une quelconque des revendications 1 à 6, **caractérisé en ce que** les diols aliphatiques ramifiés utilisés pour la fabrication du composant A) sont de formule générale
HO-X-OH
dans laquelle X représente un radical alkyle ou alcényle ramifié de 3 à 36 atomes C.

8. Procédé de fabrication de prépolymères comprenant des groupes isocyanate selon l'une quelconque des revendications 1 à 6, **caractérisé en ce que** le composant A) consiste en des polyester-polyols à base d'acide succinique et/ou d'acide adipique, de 1,2-éthanediol, de 1,4-butanediol, de 1,6-hexanediol, de glycérine et/ou de 1,1,1-triméthylolpropane, ainsi que des diols aliphatiques ramifiés 1,3-butanediol, néopentylglycol, 2-butyl-2-éthyl-1,3-propanediol, 2,2,4-triméthyl-1,5-pentanediol et 2,2,4- et/ou 2,4,4-triméthylhexanediol.

9. Procédé de fabrication de prépolymères comprenant des groupes isocyanate selon l'une quelconque des revendications 1 à 8, **caractérisé en ce que** le composant B) consiste en des polyester-polyols qui ont été fabriqués par polymérisation par ouverture de cycle à partir d'ε-caprolactone en utilisant du 1,4-butanediol, du diéthylène glycol, du néopentylglycol, du 1,6-hexanediol, de la glycérine et/ou du 1,1,1-triméthylolpropane en tant que molécule de départ.

10. Procédé de fabrication de prépolymères comprenant des groupes isocyanate selon l'une quelconque des revendications 1 à 9, **caractérisé en ce que** les diisocyanates monomères non réagis en excès sont séparés des prépolymères comprenant des groupes isocyanate par distillation à couche mince après la réaction ou le mélange.

11. Prépolymères comprenant des groupes isocyanate ayant une teneur en NCO de 2,8 à 18,0% en poids, une fonctionnalité isocyanate moyenne de 1,9 à 3,0 et une viscosité mesurée selon DIN EN ISO 3219 d'au plus 3000 mPas à 23 °C, pouvant être obtenus par un procédé selon l'une quelconque des revendications 1 à 10.

12. Utilisation des prépolymères comprenant des groupes isocyanate selon la revendication 11 en tant que composants de départ lors de la fabrication de matières plastiques à base de polyuréthane.

13. Agent de revêtement contenant des prépolymères comprenant des groupes isocyanate selon la revendication 11.

14. Substrats revêtus avec des agents de revêtement selon la revendication 13.

15. Corps moulé contenant des prépolymères comprenant des groupes isocyanate selon la revendication 11.
